# EUROPEAN PATENT SPECIFICATION

(11) **EP 3 027 788 B1**
(45) Date of publication and mention of the grant of the patent: **12.06.2019**
(21) Application number: 14772266.4
(22) Date of filing: 25.07.2014
(51) Int. Cl.: C25B 1/00, C25B 11/04, C25B 11/12, B01J 35/00, C25B 15/08

(54) **DEVICE FOR HYDROGEN AND ELECTRICITY PRODUCTION**
GERÄT FÜR WASSERSTOFF UND STROM HERSTELLUNG
APPAREIL POUR LA PRODUCTION D'HYDROGÈNE ET D'ELECTRICITÉ

(30) Priority: 30.07.2013 US 201361860139 P; 01.08.2013 US 201361861279 P; 28.03.2014 GB 201405671
(43) Date of publication of application: 08.06.2016
(73) Proprietor: Katholieke Universiteit Leuven, 3000 Leuven (BE)
(72) Inventor: MARTENS, Johan, B-3040 Huldenberg (BE); RONGE, Jan, B-3090 Overijse (BE); BOSSEREZ, Tom, B-1851 Humbeek (Grimbergen) (BE)
(74) Representative: DenK iP
(86) International application number: PCT/BE2014/000036
(87) International publication number: WO 2015/013776

(56) References cited:
- WO-A1-2012/135862
- US-A1- 2006 034 757
- US-A1- 2007 092 777
- LAURENCE M. PETER ET AL: "Kinetics of light-driven oxygen evolution at [alpha]-Fe2O3 electrodes", FARADAY DISCUSSIONS, vol. 155, 1 January 2012 (2012-01-01), pages 309-22, XP055150931, ISSN: 1359-6640, DOI: 10.1039/c1fd00079a
- J. RONGÉ ET AL: "Air-based photoelectrochemical cell capturing water molecules from ambient air for hydrogen production", RSC ADVANCES, vol. 4, no. 55, 4 July 2014 (2014-07-04), page 29286, XP055149996, ISSN: 2046-2069, DOI: 10.1039/C4RA05371K

## Description

### Background and Summary

### BACKGROUND OF THE INVENTION

### A. Field of the Invention

The present invention relates generally to liquid water-neutral light (e.g. solar light) hydrogen production using water molecules captured from ambient air and to an apparatus to carry out such process, for instance an energy device or light driven apparatus for hydrogen production from water vapor and sunlight and transformation of the generated hydrogen into electricity production and, more particularly to a system and method for the production of hydrogen and electricity from ambient air humidity. This energy device can be lightweight.

Several documents are cited throughout the text of this specification; however, there is no admission that any document cited is indeed prior art of the present invention.

### B. Description of the Related Art

Environmental pressure on carbon based fuels stimulates great interest in hydrogen as a secondary energy vector provided it is produced from alternative energy sources (Edwards, P. P. et al. Phil. Trans. A 365, 1043-1056 (2007)). Sunlight driven photoelectrochemical water splitting is one of these appealing alternatives to produce hydrogen. Since the demonstration of photocatalytic water splitting by Fujishima and Honda in 1972 (Fujishima, A. & Honda, K. Nature 238, 37-38 (1972)) the prospect of a sustainable chemical energy source has spurred steady progress toward practical photoelectrochemical cells (PECs).

The efficiency of the most advanced photoelectrodes has reached the 5% range³, and the durability of electrodes has been improved substantially (Paracchino, A. et al. Nature Mater. 10, 456-461 (2011))

PECs bear the promise of affordable solar hydrogen generation devices made of earth abundant metals (Pinaud, B. et al. Energy Environ. Sci. 6, 1983-2002 (2013)). Several photoelectrochemical setups performing solar water splitting without sacrificial chemicals or electrical bias have been reported (Reece, S. Y. et al. Science 334, 645-648 (2011) and Maeda, K. et al. J. Am. Chem. Soc. 132, 5858-5868 (2010)) and small solar hydrogen production systems called "artificial leaves" for practical application have been demonstrated Pinaud, B. et al. Energy Environ. Sci. 6, 1983-2002 (2013), Haussener, S. et al. Energy Environ. Sci. 5, 9922-9935 (2012) and Zhai, P. et al. Energy Environ. Sci. 6, 2380-2389 (2013))
Most reported photoelectrochemical cells are wet systems. The need of liquid water for their operation in potential large scale application could be a hurdle in regions with limited water supply, and competition with the agriculture sector where water scarcity has great relevance is a concern. In this respect the idea of using ambient air as a source of water is appealing. In applications where weight is important the filling of a photoelectrochemical cell with air instead of water or liquid electrolyte will present a significant benefit.
At 20°C air at 100% relative humidity contains 1.5% water. Even a desert such as Sahara has an average relative humidity of 25% and rare are the places on earth where the relative humidity at the hottest time of the day drops below 5%.
The use of air entails the additional problem of the high concentration of molecular oxygen stimulating the back reaction. Oxygen molecules furthermore are mediators for recombination of electron-hole pairs generated by illumination of a semiconductor such as anatase TiO₂, and deteriorate this way the photoefficiency.
Some concepts have been proposed to alleviate this oxygen problem. Application of a chromia shell has been shown to prevent oxygen photoreduction and back reaction on noble metal catalyst particles (Maeda, K. et al. Angew. Chem. 122, 4190-4193 (2010)). Surface carbonate species on anatase can assume similar function (Sayama, K. & Arakawa, H. J. Chem. Soc. Faraday. Trans. 93, 1647-1654 (1997)).
Application of an electrical or chemical bias is another means to counter the negative effects of oxygen molecules, but it complicates the set up and reduces the practical use. In a two-compartment photoelectrochemical cell the back reaction can be prevented by the spatial separation of hydrogen and oxygen gases (Haussener, S. et al. Energy Environ. Sci. 5, 9922-9935 (2012)), but oxygen photoreduction and oxygen mediated charge recombination need a solution.

Document WO2012135862A1 shows an electrolytic cell that uses water vapour as feedstock, and includes a reduction catalyst (IrRuOx). However, the problem of dehydration of the cell persists due to the exposure to the sun.

Thus, there is a need in the art for an operational device that under sunlight does generate hydrogen from ambient air humidity.

Present invention provides such solution, without any water oxidation co-catalyst (e.g. IrRuOx), by a hydrogen generating device comprising at least one semiconductor photoanode which surprisingly performs the water oxidation without back reaction and without deteriorated photoefficiency. Such liquid water-neutral sustainable energy systems eliminates the need to feed it by liquid water supply.

Eliminating the need for liquid water supply paves the way to water-neutral sustainable energy systems.

The use of air as the feed in the apparatus of present invention is a way to reduce complexity and cost. Frost protection is not needed. Water supply management can be very simple, since air supply is achieved by natural convection. With 10% solar-to-hydrogen efficiency such installation will consume water at a rate of *ca.* 20 g m⁻² h⁻¹ to generate *ca.* 2 g m⁻² h⁻¹ of hydrogen, or an energy equivalent of 240 kJ m⁻² h⁻¹. The minimum needed air volume at 20 °C, 1013 hPa and 60% relative humidity then is ∼2 m³ h⁻¹ m⁻². Even in the Sahel desert, at an average relative humidity of about 20% and temperatures of 29 °C (ref. 21), one cubic meter of air contains 6 g water. All these advantages of air-based PEC cells are arguments for a paradigm shift for PEC cell development. Due to its simplicity and zero water consumption, air-based PEC technology is attractive. Besides carbon-neutral, renewable energy production ideally should also be water-neutral, to avoid jeopardising local fresh water supplies. Water-neutral, carbon-neutral production of solar fuel uniquely decouples climate change, water scarcity and energy production and could provide solutions for the water-energy-food nexus.

### SUMMARY OF THE INVENTION

Thus, there is a need in the art for an operational device that under sunlight does generate hydrogen from ambient air humidity. Present invention provides such solution, without any water oxidation co-catalyst (e.g. IrRuOx), by a hydrogen generating device comprising at least one semiconductor photoanode which surprisingly performs the water oxidation without back reaction and without deteriorated photoefficiency.

Oxygen molecules are mediators for recombination, can cause back reaction and deteriorate photoefficiency. Present invention in a particular embodiment concerns an apparatus for hydrogen production from ambient air humidity and light and for transformation of the generated hydrogen into electricity, comprising: at least one semiconductor photoanode which comprises macroscopic electric conducting material coated at least in part by nanoscopic electric conducting material, and characterized in that the nanoscopic electric conducting material of the photoanode is entirely coated or covered with semiconductor layer (for instance the nanoscopic electrical conductor is entirely covered by TiO2). This prevents that the high concentration of molecular oxygen stimulates a back reaction or that the oxygen molecules in the air function as mediators for recombination of electron-hole pairs generated by illumination and deteriorate this way the photoefficiency.
The photoanode is hereby positioned to receive light and receiving ambient air. The apparatus comprises a self-hydrating or water capturing material of the group consisting of water capturing microporous materials and self-hydrating monolithic membrane. Furthermore this apparatus comprises at least one cathode comprising macroscopic electric conducting material coated at least in part by nanoscopic conduction material. The photoanode and cathode are conductively interconnected for electron flow and are further separated from molecular flow by a proton exchange membrane or a membrane electrode assembly (MEA) comprising such proton exchange membrane for the proton flow there through to the cathode. Optimally the cathode is under an inert gas. For instance the cathode can be in a confined environment or chamber wherein the H2 which its produces is released and is and is transported from an outlet or a port. This apparatus can produce hydrogen from low humidity air (ambient air) and under a condition of exposure molecular oxygen (e.g. 21% present in ambient air).

This device to improve efficiency under ambient conditions of air and sunlight further comprises an illumination controller, being a switch (illumination / non-illumination switch) to let follow in succession periods of illumination of the at least one semiconductor photoanode with periods of non-illumination (darkness) of the at least one semiconductor photoanode. Further, the membrane electrode assembly (MEA) comprises incorporating hygroscopic silica. By introducing dark periods are switched with illuminations periods for instance of ca. 200-1000s of illumination high photocurrents are retained. The semiconductor photoanode hydrogen generating device of present invention, without water oxidation co-catalyst can combine any of the illumination controllers with the hygroscopic silica comprised in the MEA.

Present invention provides such solution, without any water oxidation co-catalyst (e.g. IrRuOx), by a hydrogen generating device comprising at least one semiconductor photoanode which surprisingly performs the water oxidation without back reaction and without deteriorated photoefficiency. Such liquid water-neutral sustainable energy systems eliminates the need to feed it by liquid water supply. Eliminating the need for liquid water supply paves the way to water-neutral sustainable energy systems.
In one aspect of the invention, the hydrogen gas is produced at the cathode side of a two-compartment photoelectrochemical cell fed with ambient air and illuminated at the photoanode.

Another aspect is that the photo electrochemical device of present invention does not need the combination of the two co-catalysts, water oxidation catalyst and proton reduction catalysts, for production of hydrogen gas from ambient air humidity.
The device has an electrode architecture, which can be robust. This electrode architecture comprises a proton exchange membrane and electric conducting macrostructured material on which electric conducting nanostructured material is mounted or which is coated with electric conducting nanostructured material.

At the photoanode the nanostructured conducting material comprises a continuous nanocoating of semiconductor oxides which is photoactive and also protects the conducting substrate from being oxidized.

At the cathode the nanoconducting material comprises proton reduction hydrogen gas generating electrocatalyst nanoparticles.

Water adsorbing stubs composed of water adsorbing and water condensing inorganic nanoparticle aggregates are implanted in the proton exchange membrane for maintaining hydration.

Another aspect of the invention is the hydrogen production device composed of lightweight materials and requiring no other input but ambient air and sunlight. The operation of the device with air instead of for instance liquid water presents another weight gain. It is especially suitable for automotive applications and for aircrafts and aerospace application. The cell can be run in reverse mode in the dark to produce electricity from stored hydrogen

In a particular embodiment this device to improve efficiency under ambient conditions of air and sunlight comprises an illumination controller, such controller can be 1) an illumination intensity controller, 2) a filter to filter out visible light to reduce dehydration or heating up and/or 3) a switch (illumination / non-illumination switch) to let follow in succession periods of illumination of the at least one semiconductor photoanode with periods of non-illumination (darkness) of the at least one semiconductor photoanode. In yet another embodiment the membrane electrode assembly (MEA) comprises incorporating hygroscopic material. By introducing dark periods switched with illuminations periods for instance of ca. 200-1000s of illumination high photocurrents are maintained. The hydrogen generating device of present invention, with semiconductor photoanode without water oxidation co-catalyst, can combine any of the illumination controllers with the hygroscopic material comprised in the MEA. Such an operational device that does generate hydrogen in a cathode compartment and in which a semiconductor performs the oxidation of airborne water vapor in a separate anode compartment has not yet been demonstrated

In accordance with the purpose of the invention, as embodied and broadly described herein, the invention is broadly drawn to a membrane-electrode architecture in a photoelectrochemical device for production of hydrogen gas from water vapor contained in air for instance ambient air or another gas mixture using a light source such as sunlight. Such photoelectrochemical device can be constructed as a lightweight apparatus. The apparatus is particular suitable for using ambient air humidity as a supply of raw material for feeding the process of hydrogen production.

While operational in a two-compartment apparatus of present invention the illuminated anode is fed with ambient air that produces pure hydrogen at the cathode compartment. While the anode is left open to ambient air, pure hydrogen gas is produced at the cathode side of dual compartment apparatus during a full day outdoor experiment under solar illumination. Providing water through the air instead of inert carrier gas entails the additional challenge of exposing the photoanode to an oxygen containing atmosphere. Oxygen molecules are mediators for recombination, can cause back reaction and deteriorate photoefficiency.

An embodiment to optimize operation and prevent or reduce capacity of the electrodes is provide in an embodiment of present invention by self- hydrating electrodes. This is for instance obtainable with electrodes that comprise at least one self-hydrating monolithic membrane for instance a self-hydrating monolithic membrane that comprises water capturing zeolite for instance water capturing zeolite stubs. Typical zeolites that act as water capturing microporous materials may have various structural group (Nickel-Strunz classification) as decribed^{22,23}. Such self-hydrating monolithic membrane-electrode architecture is as consequence well equipped for water capturing in air of limited humidity. A suitable photoanode for such apparatus or assembly of present invention comprises or consists of ultrathin titanium dioxide semiconductor film, conformally coated on multi-walled carbon nanotubes to favour charge separation and tolerate atmospheric oxygen.

An object of the invention is to provide an energy device that produces hydrogen gas from a water vapor containing gas mixture using sunlight. In such energy device the water vapor provides the H atoms for hydrogen gas production are contained in a gas mixture comprising molecular oxygen. This the water vapor which provides the H atoms for hydrogen gas production can for instance be contained in ambient air. The invention is of advantage in sych energy device is compact and capable of being easier for users to employ in practice.

Preferably, the apparatus that produces hydrogen gas from a water vapor containing gas mixture using sunlight is arranged to comprise a proton exchange membrane, macroscopic electric conducting electrode material and nanoscopic electric conducting material characterized in that the nanoscopic electric conducting material of the photoanode is entirely coated with semiconductor nanolayer.

The energy device that produces hydrogen gas from a water vapor containing gas mixture using sunlight can also be arranged to comprise a proton exchange membrane, macroscopic electric conducting electrode material and nanoscopic electric conducting material characterized in that the nanoscopic electric conducting material of the photoanode is entirely coated with a titanium dioxide layer.

Preferably, in the energy device that produces hydrogen gas from a water vapor containing gas mixture using sunlight is arranged to comprise a proton exchange membrane, macroscopic electric conducting electrode material and nanoscopic electric conducting material characterized in that the nanoscopic electric conducting material of the photoanode is entirely coated with semiconductor oxide layer with a thickness of more than 3 nm and less than 15 nm.

The energy device that produces hydrogen gas from a water vapor containing gas mixture using sunlight according to an embodiment of present invention can also be arranged to comprise a proton exchange membrane, macroscopic electric conducting electrode material and nanoscopic electric conducting material characterized in that the nanoscopic electric conducting material of the cathode is supporting nanosize platinum particles or is supporting Pt, Pd, Ni or alloys comprising these containing those nanosize platinum particles.

Such multifunctional energy device according to the above described embodiments is in a particular embodiments of present prepared using atomic layer deposition and plasma enhanced atomic layer deposition techniques.

Further scope of applicability of the present invention will become apparent from the detailed description given hereinafter.

### Detailed Description

### DETAILED DESCRIPTION OF EMBODIMENTS OF THE INVENTION

The following detailed description of the invention refers to the accompanying drawings. The same reference numbers in different drawings identify the same or similar elements. Also, the following detailed description does not limit the invention. Instead, the scope of the invention is defined by the appended claims and equivalents thereof.

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn to scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to the devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, Figure, or description thereof for the purpose of streamlining the disclosure and aiding the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Other embodiments of the invention will be apparent to those skilled in the art from consideration of the specification and practice of the invention disclosed herein.
It is intended that the specification and examples be considered as exemplary only.
Each and every claim is incorporated into the specification as an embodiment of the present invention. Thus, the claims are part of the description and are a further description and are in addition to the preferred embodiments of the present invention.

Each of the claims set out a particular embodiment of the invention.
The following terms are provided solely to aid in the understanding of the invention.

The object of the present invention is to provide a method for generating hydrogen from ambient air humidity and light as energy source. We discovered such an electrode architecture that can be operated using hydrated ambient air, and even ambient air as a source of water.

An assembly of an embodiment concerns a monolithic membrane-electrode architecture with a photoanode made from multi-walled carbon nanotubes grafted on carbon fibre electrode with conformal anatase TiO2 thin film coating (TiO2/MWCNT), Nafion® proton exchange membrane (PEM), and platinum-decorated MWCNTs (Pt/MWCNT) at the cathode producing hydrogen gas using the electrons and protons from the water oxidation. Electrode surfaces are provided with water adsorbing zeolite stubs. It comprises carbon fibre with grafted MWCNTs and thin film TiO2 coating on MWCNTs at the anode and a cathode MWCNTs with Pt nanoparticles and hydrating zeolite stubs. A TiO2/MWCNT photoanode after 15 h of UV illumination showed no signs of degradation. In yet an embodiment the carbon fiber mesh were coated with MWCNTS and comprised dense forests of the CNTs present on all sides of the carbon fiber, there were multiwall carbon nanotubes on top of a carbon fiber with a continuous conformal TiO2 coating. MWCNT diameters could ne 20 nm and the TiO2 film thickness ∼7-10 nm. In yet a particular embodiment the Nafion® coating.had a 2.5 µm thick Nafion® coating.

According to one embodiment this effective architecture comprises a proton exchange membrane, such as Nafion, flanked with macroscopic electric conducting material, such as carbon paper. On the macroscopic conducting material nanoscopic conduction material is attached, such as multiwall carbon nanotubes grafted on carbon paper. These conductive elements adjacent to the proton exchange membrane are either photoanode or cathode. The carbon nanotubes at the photoanode are coated with a continuous layer of semiconductor, such as oxides (*e*.*g*. TiO₂, Fe₂O₃, ZnO, NaTaO₃, WO₃, BiVO₄, SrTiO₃, Cu₂O), sulfides (*e*.*g*. CdS, ZnS), nitrides (*e*.*g*. GaN, TaON) or their combinations. Optionally, plasmonic nanoparticles the continuous semiconductor layer of the photoanode can be as a method for increasing solar cell efficiency by forcing more light to be absorbed. Silver-gold alloy nanoparticles are a typical example. On the cathode the electric conducting multiwall carbon nanotubes are coated with platinum nanoparticles. The membrane-electrode assembly is mounted in a two-compartment photoelectrochemical cells. The cathode compartment can either be closed to accumulate the produced hydrogen, or left open, or purged with inert gas to transport and collect the produced hydrogen.
This embodiment advantageously comprises that when the anode is fed with a hydrated gas stream, such as hydrated air, or simply ambient air without any hydration operation and the photoanode is illuminated that hydrogen is produced.

This embodiment of the invention advantageously comprises that when electricity is needed, the illumination is interrupted and the cell converts the previously produced solar hydrogen into electricity like a fuel cell.

Some of the techniques described above may be embodied as an apparatus according to the invention that when operational performs three tasks that otherwise would be performed by three distinguished devices: (i) a photovoltaic device to produce electricity from sunlight, (ii) an electrolyzer to electrolyze water to produce hydrogen, and a (iii) fuel cell to convert the stored solar hydrogen into electricity when needed. This embodiment of the invention advantageously comprises that the integration of functions minimizes space requirement which is advantageous for applications such as in the automotive sector and especially cars, trucks, trains, busses, aircrafts, spacecrafts, and off-road vehicles and energy devices. An additional advantage of the apparatus of present invention operation with air instead of liquid water according to the current systems represents an important weight saving. An additional advantage of the device according to the invention for small scale, household and automotive application is that the hydrogen can be produced at low concentration in an inert gas, such as below 4% in nitrogen. In and around the device it is unlikely that the lower explosion limit of about 4 volume % hydrogen in air will be reached, which eliminates the explosion hazard. Large scale systems according to the invention could be equipped with a hydrogen concentration and pressurization unit and be combined with CO₂ mitigation systems. Mixtures of solar hydrogen and carbon dioxide could then be converted into gaseous or liquid fuels such as methane, carbon monoxide, formic acid, methanol, formaldehyde, or molecules with more than 1 C-atom and liquid mixtures suitable for substitution of fossil carbon sources.

### Example 1: Demonstration of the oxygen problem using standard electrodes

The photoelectrochemical device comprised a graphite flow-field plate at the cathode compartment and a fused silica plate at the anode side. Both the fused-silica plate and the graphite plate contain serpentine flows providing an optimal contact with the electrode surface¹³. In this reference experiment, the flow of air through the anode compartment is 12.5 ml/min. At the cathode side either there is no flow, or a nitrogen flow is applied at 25 ml/min. Air was hydrated by bubbling through a reservoir of water at room temperature. The device was illuminated by means of a Xe lamp (66984, Oriel, Newport, 200 nm < λ < 1000 nm) adjusted such that the incident intensity equals 100 mW/cm². The photocurrents were recorded using a potentiostat (Versastat 4)(Princeton Applied Research, Oak Ridge, TN) and Versastudio electrochemical analysis software. The outlet of the cathode compartment was analyzed with a Quantitative Gas Analyzer (QGA)(Hiden Analytical, Warrington, UK). The electrodes consisted of conducting and chemically inert Toray paper. The cathode was prepared by depositing platinum on Toray paper via drop-casting of a suspension of Pt/CB and Nafion monomer in ethanol on Toray paper, followed by air drying at 60°C. The Pt loading was 0.03 mg/cm² and the Nafion coating 0.01 mg/cm². The anode was obtained by electrophoretic deposition of commercial P25 TiO₂ on Toray paper according to the method of Boccaccini, A. et al. (J. Mater. Sci. 39, 851 - 859 (2004)). A home-made electrophoresis cell was used comprising Inox sheets (AISI321) held 1.0 cm apart by a Teflon® holder. A circular hole in the Teflon® mask with a diameter of 1 cm ensured that an area of 0.78 cm² of the Toray paper was coated. The potential was controlled by a potentiostat (Versastat 4, Princeton Research Systems). An electric field of 10 V/cm was applied for 60 s. After deposition, the electrodes were dried in air for 24 h and, subsequently, annealed in air for 2 h at 450°C, attained at a ramping rate of 10°C/min. The deposited amount of TiO₂ was 0.5 mg/cm².
Nafion® membranes were preconditioned according to an established procedure. Nafion® membrane was boiled in 5% hydrogen peroxide for 1 h and then treated in alternating baths of boiling 1 M H₂SO₄ and boiling water for 2 and 3 h, respectively. After the last treatment in boiling water, the membrane was kept in MilliQ water in the dark at room temperature. Prior to using a membrane, it was removed from the water, quickly blotted to remove bulk water and then kept in an Inox drying holder at room temperature for 24 h. Membrane-electrode assemblies were prepared by fixing the anode and cathode sheets on opposite sides of the pretreated Nafion® membrane, and hot-pressing between Teflon® liners at 5 MPa and 130°C for 2.5 min. After hot-pressing, the assembly was carefully removed from between the liners and allowed to cool in an Inox holder.

Molecular oxygen from the air fed at the photoanode has a dramatic impact on the photocurrent obtained using the reference membrane-electrode assembly. The photocurrent using air is systematically lower than using nitrogen carrier gas. Feeding the anode compartment with hydrated inert gas instead of air resulted in a photocurrent stabilizing around 35 µA/cm². This experiment confirming the dramatic impact of molecular oxygen contained in the air.

### Example 2: Overcoming of the oxygen problem using a membrane-electrode assembly

A membrane-electrode assembly was prepared by grafting multiwall carbon nanotube forests on the carbon paper and coating them with a continuous layer of a TiO₂ with a thickness of at least 3 nm, and preferentially at least 5 nm and less than 15 nm for the photoanode. Such continuous TiO₂ layer can be achieved by Atomic Layer Deposition. Atomic layer deposition of TiO₂ on the grafted carbon nanotubes was performed at 100°C. Tetrakis (dimethylamido) titanium (TDMAT) (99.999% Sigma-Aldrich) and O₃ generated by an ozone generator (Yanco Industries LTD) were alternatingly pulsed into the ALD chamber at pressures of 0.3 and 0.5 mbar, respectively. The concentration of ozone in the flux was 145 µg/mL. The pulse (20 s) and pump time (40 s) were optimized to allow for a uniform coating of TiO2 along the entire length of the MWCNTs and to prevent the occurrence of chemical vapor deposition type reactions. To achieve a 7 nm thick coating, 200 cycles were applied. The amorphous TiO₂ was crystallized to anatase by heating at 450°C. The photocathode was prepared by applying Plasma Enhanced Atomic Layer Deposition of platinum on supported CNT forests using (methylcyclopentadienyl)-trimethylplatinum (MeCpPtMe₃) precursor (Longrie, D. et al. ECS J. Solid State Sci. Technol 1, 123-129 (2012)).
The photoanode and cathode were mounted on Nafion membrane as explained in Example 1. SEM images were obtained with a Nova NanoSEM450 (FEI). The samples were mounted on aluminum stubs.

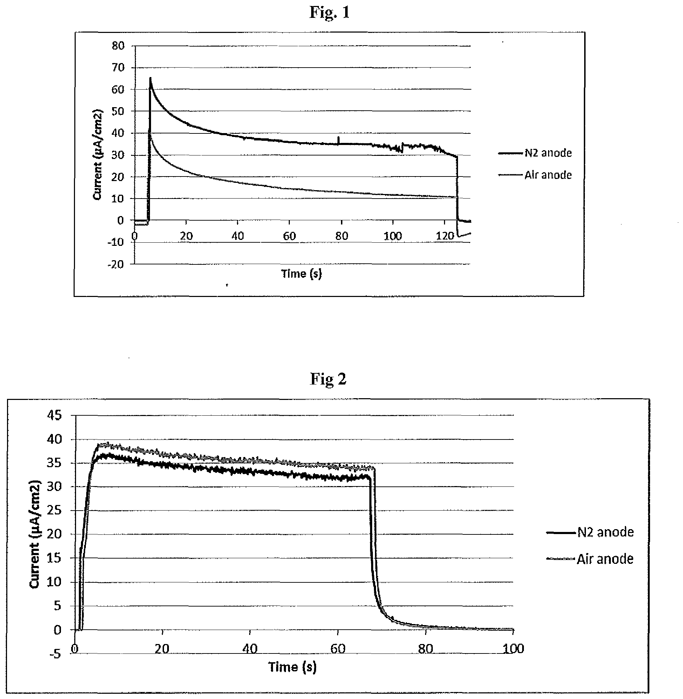

A photoelectrochemical experiment was run using this membrane-electrode assembly (Figure 1). The use of air instead of inert nitrogen gas to introduce water vapor at the anode did not deteriorate the photocurrent demonstrating the achievement of an oxygen tolerant membrane-electrode assembly.

### Example 3: Remediation of the membrane dehydration problem under illumination

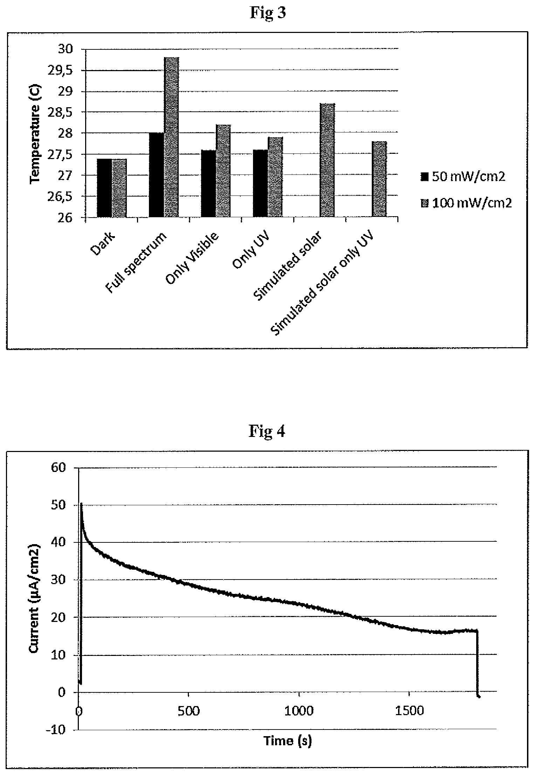

Maintaining the proton exchange membrane of the device hydrated is a critical issue. The relative air humidity determines membrane moisture content and proton conductivity from anode to cathode compartment. Under illumination, the temperature in the anode compartment is higher than in a reference dark condition (Figure 2) so relative humidity drops and water evaporates from the membrane . As a consequence, the photocurrent being representative of the hydrogen formation rate drops over time (Figure 4).

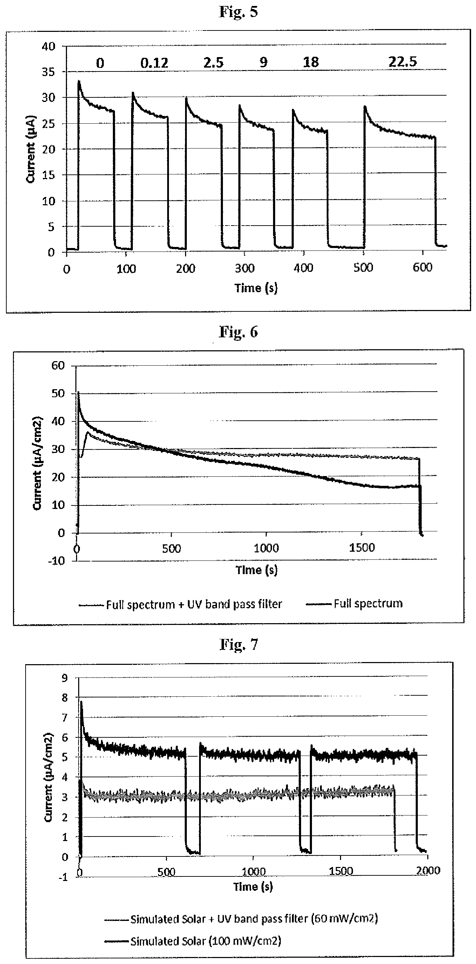

To prevent membrane dehydration, air flow in the anode compartment can be interrupted to counter dehydration (Figure 5).

In different embodiments of present invention four approaches to mitigate the membrane dehydration problem can be used:

### 1. Diminish the illumination intensity

Under reduced illumination intensity, the membrane is less heated and dehydration is less of a problem.

### 2. Filter out ineffective wavelengths from the light source

Visible light is only little absorbed by the TiO₂ semiconductor and contributes little to hydrogen formation, but it produces heat. It can be filtered out to reduce heating up (Figures 3,6,7).

### 3. Modify the membrane electrode assembly by incorporating hygroscopic silica particles

Hygroscopic particles dispersed in the proton exchange membrane capture moisture from the air and keep the membrane hydrated. Nafion with hygroscopic particles was added as a top layer on both sides of the Nafion membrane.

Many inorganic materials have water adsorbing properties, such as silica and alumina gels, zeolites, clays. Capillary condensation of water can be achieved in pores with nanometer dimensions, and especially in pores with diameters from 2 to 100 nm. Such pores can be present inside individual particles, or can be created by the interstitial voids of aggregated nanoparticles.

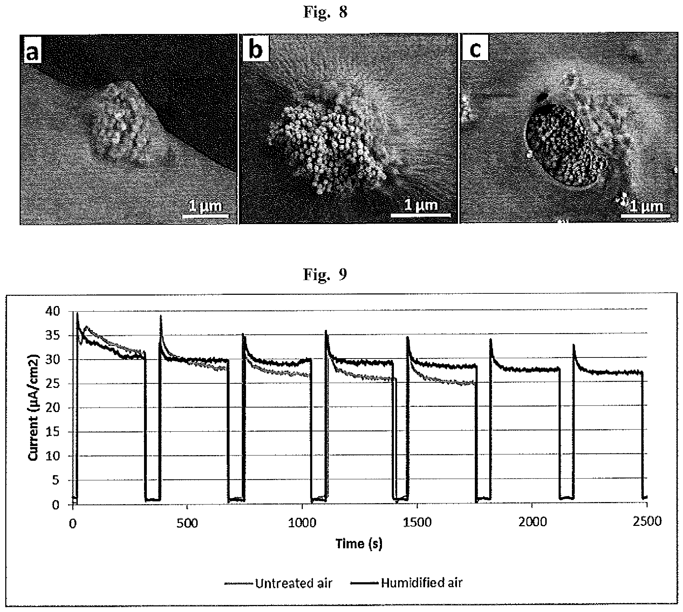

Silicalite zeolite nanopowder introduced into the proton exchange membrane was found to be a means of adsorbing water from the air fed into the anode compartment. The introduced nanopowder was found concentrated at surface stubs (Figure 8). The hydroxylated surfaces of the zeolite nanopowder favors water adsorption and capillary condensation in the interstitial voids and concentration of water in the membrane at reduced relative humidity. The operation of a cell with a proton exchange membrane equipped with water adsorbing stubs at 100% and 40% relative humidity is demonstrated in Figure 9.

### 4. Switch between illumination and dark regeneration

In the dark, relative humidity increases in the anode compartment as temperature drops back to ambent temperature and moisture levels in the membrane are restored (Figures 7,9). By introducing short dark periods after ca. 200-1000s of illumination, an initial high photocurrent can be restored.

Any of these approaches can be combined in different embodiments of present invention.

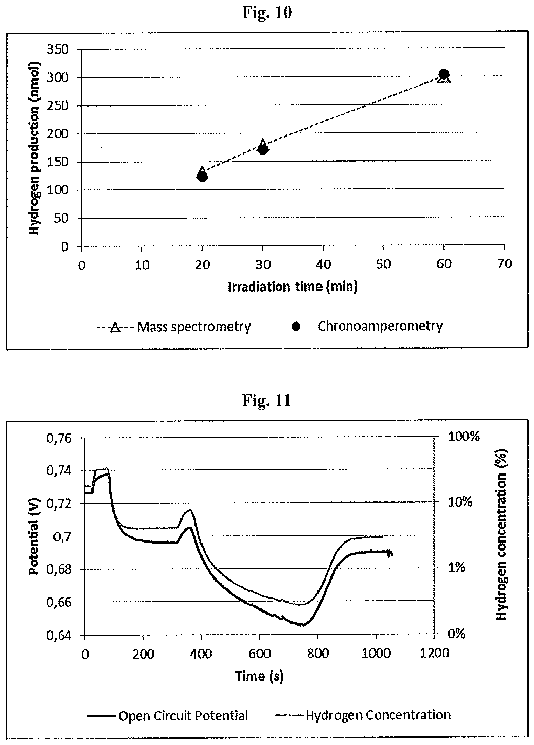

The cell according to the present invention has high Faradaic efficiency. Within experimental error the Faradaic efficiency is close to 100%. Quantification of the hydrogen production using a membrane electrode assembly modified with hygroscopic nanopowder is shown in Figure 10.

### Example 4: Operation of the cell in reverse mode for electricity production

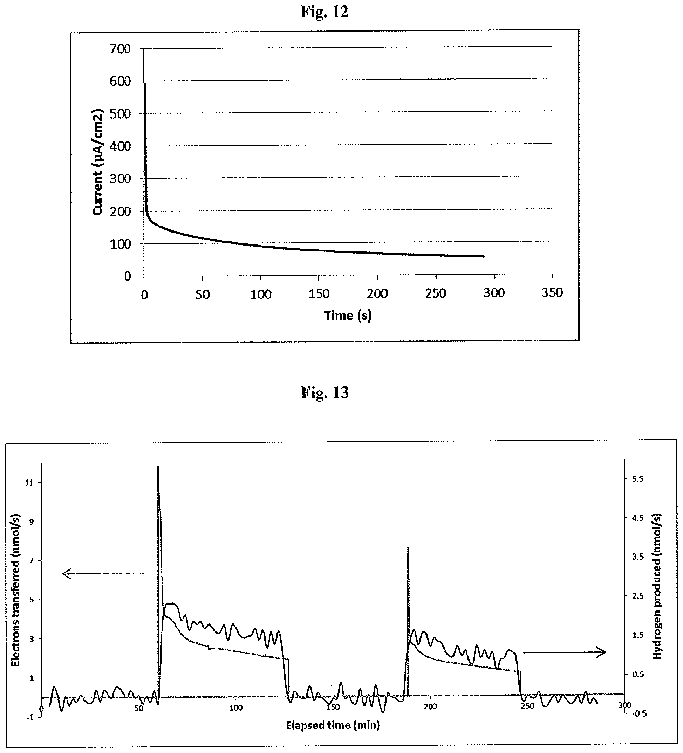

The two-compartment photoelectrochemical cell according to this invention can be operated in the dark in reverse mode to produce electricity from hydrogen with air as the oxidant. Open circuit potentials are relatively high for such system under ambient conditions, even at low hydrogen concentrations (Figure 11). Short circuit current is relatively low (Figure 12). This current can be increased by adding noble metal catalyst nanoparticles to the anode surface which in the hydrogen production mode of the cell can serve the purpose of plasmonic antennae.

The apparatus can be further comprising an element to switch the operation of hydrogen gas production from water vapor in the ambient air humidity to converting hydrogen into electricity.

### Example 5: Palladium as alternative catalyst for hydrogen production

A membrane-electrode assembly according to the invention. The cathode was prepared by depositing palladium on activated carbon (AC) via drop-casting of a suspension of Pd/AC and Nation® monomer in ethanol on Toray paper, followed by air drying at 60°C. The Pd loading was 0.05 mg/cm² and the Nafion coating 0.26 mg/cm².
The anode was obtained by electrophoretic deposition of commercial P25 TiO₂ on Toray paper according to the method of Boccaccini, A. et al. (J. Mater. Sci. 39, 851 - 859 (2004)). A home-made electrophoresis cell was used comprising Inox sheets (AISI321) held 1.0 cm apart by a Teflon® holder. A square hole in the Teflon® mask with dimensions of 2.5 x 2.5 cm ensured that an area of 6.25 cm² of the Toray paper was coated. The potential was controlled by a potentiostat (Versastat 4, Princeton Research Systems). An electric field of 10 V/cm was applied for 45 s. After deposition, the electrodes were dried in air for 24 h and, subsequently, annealed in air for 2 h at 450°C, attained at a ramping rate of 10°C/min. The deposited amount of TiO₂ was 0.672 mg/cm².
Nafion 117® membranes were preconditioned according to an established procedure. Nafion® membrane was boiled in 5% hydrogen peroxide for 1 h and then treated in alternating baths of boiling 1 M H₂SO₄ and boiling water for 2 and 3 h, respectively. After the last treatment in boiling water, the membrane was kept in MilliQ water in the dark at room temperature. Prior to using a membrane, it was removed from the water, quickly blotted to remove bulk water and then kept in an Inox drying holder at room temperature for 24 h. Membrane-electrode assemblies were prepared by fixing the anode and cathode sheets on opposite sides of the pretreated Nafion® membrane, placing a sandwich layer of Nafion® on top of the anode, and hot-pressing the assembly between Teflon® liners at 5 MPa and 130°C for 2.5 min. After hot-pressing, the assembly was carefully removed from between the liners and allowed to cool in an Inox holder.

Figure 13 shows the result of a photoelectrochemical experiment that was run using this membrane-electrode assembly according to the invention, and using an inert nitrogen gas to introduce water vapor at the anode. The transferred electrons and produced hydrogen are shown in function of the elapsed time. It is clear that hydrogen production follows the electron transfer. The photocurrent in this experiment showed an overshoot of 192 µA/cm² and after 1h a photo current of 28.8 µA/cm² was observed.

### Example 6: Design of the membrane-electrode assembly.

A design of the monolithic membrane-electrode assembly of an embodiment of present invention for performing solar hydrogen production from airborne water molecules is presented. Proton conducting membranes such as Nafion® were be convenient for separating the two electrode compartments and to collect the produced hydrogen gas separately. By fixing the electrodes directly on either side of such membrane, anode to cathode proton transport distance is made very short and efficient. Our strategy to minimize the detrimental impact of oxygen consisted of using multi-walled carbon nanotube (MWCNT) supports on a carbon fibre electrode as electrically conducting cores, and applying an ultrathin semiconducting TiO₂ shell to keep hole and electron transport distances minimal. Photogenerated electrons are efficiently extracted by the MWCNT forests and transported to the carbon fibre back contact. The TiO₂ thin film's crystal quality and electrical contact with the MWCNTs are of key importance. The presence of multiple grain boundaries in TiO₂ semiconductor is detrimental to charge transport because photogenerated carriers are scattered or trapped leading to recombination (Tschernich, Rudy W. (1992). Zeolites of the World. Geoscience Press. p. 563). Atomic Layer Deposition (ALD) is the method of choice to prepare high quality uniform TiO₂ thin films (First, E. L.; Gounaris, C. E.; Wei, J.; Floudas, C. A. (2011). "Computational characterization of zeolite porous networks: An automated approach". Physical Chemistry Chemical Physics 13 (38): 17339-17358). ALD is characterized by the alternate exposure of the surface to a chemical precursor with self-limiting surface reactions followed by hydrolysis and oxidation, producing films with accurate thickness control, excellent conformality, and uniformity over large areas. The as-deposited about 10 nm thick conformal amorphous TiO₂ coating on the MWCNTs was crystallized to anatase by heating at 550 °C for 3 h under air. Thermogravimetric analysis, Raman spectroscopy and high-resolution scanning electron microscopy revealed that MWCNTs were preserved inside the anatase TiO₂ nanotubes (Fig. 13). For the cathode a well-dispersed platinum nanophase was deposited on the MWCNTs using ALD. The small size and monodispersity of the deposited platinum nanoparticles ensured high availability of catalytic surface for hydrogen production, despite a low Pt loading of 13 µg cm⁻².

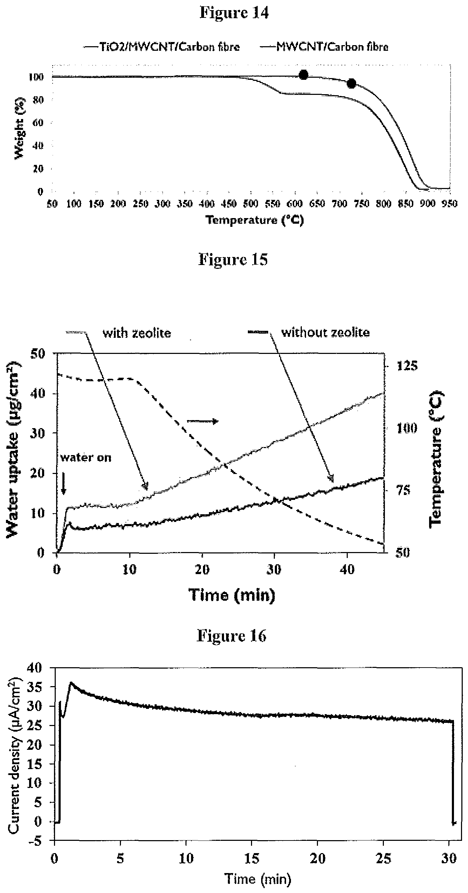

The functionality of the membrane-electrode architecture was further enhanced by covering the MWCNT/carbon fibre electrodes with an additional surface layer of Nafion® (Fig. 14). This layer provides proton conductivity and eliminates the need of a liquid electrolyte. Nafion® requires a high degree of hydration for proton conductivity, which can be problematic in ambient air at limited relative humidity (RH). Zeolites are known for their excellent water adsorbing properties (Auerbach, S. M., Carrado, K. A. & Dutta, P. K. Handbook of Zeolite Science and Technology. CRC Press (2003)). A zeolite devoid of alkali and alkaline earth metal cations was selected to avoid cation exchange with Nafion®. Silicalite nanopowder²⁵ was embedded in the superficial Nafion® layers of the membrane-electrode assembly. The zeolite was found concentrated as surface stubs. The effectiveness of the zeolite addition was demonstrated by a temperature-controlled water sorption experiment (Fig. 15). Electrodes covered with Nafion® with or without zeolite were dried at 120 °C under nitrogen flow. Subsequent exposure to humidified nitrogen gas (absolute humidity 24 g m⁻³) at 120 °C (RH = 1.5%) gave rise to fast water uptake. Upon cooling, the water content of the electrode further increased. At 50 °C (RH = 25%), the presence of 2 wt.% zeolite leads to 120% higher water uptake. Although at this stage the mechanism of the water transfer from zeolite to Nafion® is unknown, the zeolite guarantees wetting of the membrane-electrode assembly under operation at reduced humidity.

Our assembly with conformal anatase TiO₂ coating in direct contact with MWCNTs showed little sensitivity to oxygen concentration. The anode compartment was left open to humidified outside air. The cathode compartment was filled with dry nitrogen gas and sealed. A stable photocurrent was obtained under UV illumination. Consistent performance was achieved for several illumination periods. Hydrogen production was quantified for each period. The Faradaic efficiency, defined as the percentage of anode-to-cathode transferred electrons giving rise to hydrogen formation, was close to 100% in each of the measurements.

Replacing the TiO₂/MWCNT anode with an anode where TiO₂ nanoparticles are electrophoretically deposited revealed a detrimental effect of atmospheric oxygen on performance. In presence of air the photocurrent showed a strong decay within minutes. The discontinuous nature of clustered ∼20 nm TiO₂ particles with multiple grain boundaries in this case is thought responsible for photoelectron quenching by molecular oxygen.

### Example 7: ¹⁸O isotope labelling studies.

To confirm overall water splitting, N₂ gas flow was humidified with H₂¹⁸O and fed to the photoanode compartment. ³⁶O₂ formation was detected under illumination, confirming occurrence of water oxidation. Formation of ³⁴O₂ was detected as well, since the membrane contained residual H₂¹⁶O. ³²O₂ formation out of H₂¹⁶O was likely to occur as well, but could not be quantified due to background signal. The Faradaic efficiency for ³⁶O₂ was 53%. Adding the contribution of ³⁴O₂, the Faradaic efficiency was around 85%, and probably could have been even better if ³²O₂ formation was accounted for. The close to 100% Faradaic efficiency for both oxygen and hydrogen confirms the photoelectrochemical nature of overall water splitting in our PEC cell.

Besides quantitative amounts of oxygen, at the photoanode a larger concentration of CO₂ was measured under illumination as well. Such non-photoelectrochemical CO₂ formation is to be expected in the presence of TiO₂ semiconductor, which is a very effective photocatalyst for the oxidation of organics. The nitrogen flow contains a maximum of 0.5 ppm organic impurities, which cannot explain this CO₂ formation. Presumably, the carbon fibre electrode substrate is being oxidized, as the MWCNTs are protected from oxidation by the TiO₂ shell, and cell performance shows no degradation after extended use. The stability of the MWCNTs is also indicated by HR-SEM investigations of a used photoanode, which shows no apparent signs of degradation. The CO₂ mass distribution shows predominant ⁴⁸CO₂ formation in presence of H₂¹⁸O, so it is clear that water is the source of oxygen atoms. When operated in the presence of air, traces of volatile organic contaminants is subject to oxidation processes as well.

### Example 8: Operation under solar illumination.

The stability of PEC cell performance was investigated by leaving the anode compartment open to ambient air (60% relative humidity at 25 °C) and illuminating with simulated sunlight for 24 h. Prior to the experiment, the cathode compartment was flushed with dry nitrogen gas and sealed. The photocurrent gradually increased and reached a steady 5.5 µA cm⁻². Interruption of the illumination caused the current to return to very low values (< 50 nA cm⁻²) confirming the photoelectrochemical nature of the process.

We placed the cell on the roof of our laboratory on a sunny day as a proof-of-concept for outdoor hydrogen production with realistic atmosphere and light conditions. The cell was manually oriented towards the sun under a tilt angle of 30°. It was left outside for one hour periods, and taken back to the lab for analysis of the hydrogen content of the cathode compartment. That day, outside temperature rose from 26 to 31 °C during the measurements and relative humidity dropped from 55% at 8 h to 28% at 15 h. The first two hours, hydrogen production was about 85 nmol h⁻¹ cm⁻². Just after solar noon it peaked at 148 nmol h⁻¹ cm⁻². Later, hydrogen production dropped to 62 nmol h⁻¹ cm⁻². Our proof-of-concept PEC cell reached a solar-to-hydrogen efficiency of *ca.* 0.01%.

Our PEC cell is robust and reliably produces hydrogen gas without the need for preconditioning. The same assembly was used for over twenty experiments in a two-month period. It was stored between experiments without special measures. The cell is assembled and disassembled without any deterioration of performance, both under well-controlled laboratory conditions and outdoors.

### Example 9: Methods

**9a Materials.** MilliQ water with a resistivity of 18.2 MΩ.cm was used. Nitrogen gas (99.999%) was from Air Liquide (Brussels, Belgium), A stream of N₂ was bubbled through a vessel with MilliQ water at 20 °C to generate a water saturated gas stream. Hydrogen peroxide (50 wt%) and tetraethyl orthosilicate (TEOS; 98%) were obtained from Acros Organics (Geel, Belgium). Sulfuric acid (95-97%), water-¹⁸O (97 atom%), tetrakis-dimethylamido titanium (TDMAT; 99.999%) and methylcyclopentadienyl trimethylplatinum (MeCpPtMe₃) were obtained from Sigma Aldrich (St. Louis, MO). Tetrapropylammonium hydroxide (TPAOH) was obtained from Alfa (Karlsruhe, Germany). Toray 030 carbon fibre electrode material (thickness 110 µm) was obtained from Fuel Cell Earth (Stoneham, MA). Nafion® solution (5% in ethanol) and Nafion® XL proton exchange membrane were obtained from Quintech (Göppingen, Germany); Multi-walled carbon nanotubes (NC7000) from Nanocyl (Sambreville, Belgium).
**9b High-Resolution Scanning Electron Microscopy.** HR-SEM images were obtained with a Nova NanoSEM 450 (FEI, Hillsboro, OR). Samples were mounted on aluminium stubs using carbon tape and observed. For STEM, the sample was prepared by crushing electrode in a mortar and suspending the obtained material in isopropanol, followed by ultrasonication for 30 minutes. After settling of large particles, a few drops of supernatant were drop-casted on a lacy carbon mesh and observed.
**9c Thermogravimetric Analysis.** TGA was performed on a Q500 (TA Instruments, New Castle, DE). A disk of 8 mm diameter was cut from the electrode and analyzed under pure oxygen stream at a heating rate of 10 °C/min. For water sorption experiments, electrodes were first dried for 1 h at 60 °C in air, followed by equilibration under ambient conditions overnight. Subsequently, a disk of 8 mm diameter was cut from the electrode and measured under a nitrogen flow that was either dry or saturated by bubbling it through a water bath containing MilliQ water at 25 °C.
**9d X-Ray Diffraction.** XRD characterization of the TiO₂/MWCNT/carbon fiber electrode was carried out in a Bruker D8 diffractometry system with Cu Kα X-ray source.
**9e X-Ray Fluorescence.** XRF characterization of the Pt/MWCNT/carbon fiber electrode was carried out using the Artax tool in a Bruker D8 system. The equivalent thickness of Pt in Pt/MWCNT/carbon fiber electrode was estimated by comparing the XRF signal intensities of the electrode with 100 nm thick Pt layer sputtered on a planar silicon wafer.
**9f Raman spectroscopy.** The Raman measurements were performed on a home-built Raman microscope (Nikon Eclipse Ti-U) equipped with a 532 nm continuous wave diode pumped solid state laser (Cobolt Samba). The laser power at the sample was adjusted to 13 mW and the Raman signals were collected in epi-direction via the same air objective lens (Nikon 60X 0.95NA APO) and directed to the electron multiplying CCD (Model Newton 920, Andor) via a spectrograph (iHR320, Horiba) with 1200 grooves mm⁻¹. The backscattered excitation beam was blocked with a low pass filter (540LP, Chroma). Calibration of the Raman set up was performed via collection of pure toluene spectra.
**9g Zeolite synthesis.** The zeolite powder was prepared according to an established procedure 37.32 g TEOS was hydrolysed in 32.13 g aqueous TPAOH solution (40 wt%) under stirring. The emulsion thus formed under vigorous stirring was gradually transformed into a clear sol as the TEOS was hydrolysed. Then 30.55 g of water was added and the stirring continued for another 24 h. The clear precursor sol was refluxed at 95°C for three days. After cooling it to room temperature, the colloidal zeolite particles were separated by centrifugation (15,000 rpm, 15 min) and dispersed in water. The zeolite was washed until the pH of the supernatant was lower than pH 9. The dried powder material was calcined at 550 °C. The particle size was about 150 nm.
**9h MWCNT deposition.** The carbon fibre electrodes were decorated with MWCNT forests by dip-coating in a MWCNT suspension containing 0.3 wt% MWCNTs. Final MWCNT loading, determined by TGA, was about 15 wt% (0.49 mg cm⁻²).
**9i Atomic Layer Deposition of TiO₂ and Pt.** The MWCNT decorated carbon fibre electrode was loaded into a home-made ALD system with base pressure below 10⁻⁴ Pa . The sample was heated to 100 °C and exposed to a TDMAT pulse at a pressure of 50 Pa. After 20 s pulse time, the chamber was evacuated for 20 s. An ozone pulse supplied by an ozone generator (Yanco industries, Burton, Canada) was introduced into the chamber for another 20 s. The concentration and the pulse pressure of the ozone were 145 µg mL⁻¹ and 50 Pa, respectively. After the ozone pulse, 20 s pumping was used to evacuate the residual ozone and by-products again. The TiO₂ loading determined by TGA in oxidative atmosphere amounted to ∼98 µg cm⁻².
   For the Pt ALD process, MeCpPtMe₃ and ozone were used. The pulse time and evacuation time were the same as in the TiO₂ ALD process. The pulse pressures of the MeCpPtMe₃ and ozone were 80 Pa and 70 Pa, respectively, and the temperature of the sample for deposition was 200 °C. The Pt content of the cathode used in our experiments was determined to be ≤ 16 µg/cm² using TGA analysis in oxygen atmosphere until 1000 °C. XRF analysis of the Pt ALD-treated electrode revealed an equivalent flat surface thickness of 7.8 nm Pt. Assuming a Pt density of 21.45 g cm⁻³, a Pt loading of 13.1 ± 1.3 µg/cm³ was calculated, in good agreement with the TGA data.
**9j Electrode processing.** The as-deposited amorphous TiO₂ on the MWCNTs was crystallized to anatase by heating for 3 h at 550 °C under air atmosphere. A few drops of zeolite suspended in Nafion® solution (1 g L⁻¹) were drop-casted on both electrodes and excess material was blotted on a dust-free tissue. The electrodes were allowed to dry at room temperature for 30 minutes before further processing.
**9k Membrane-electrode assembly preparation.** Nafion® membrane was preconditioned by boiling in a bath of 5 wt% H₂O₂ for 1 h and then in alternating baths of MilliQ water and 1 M H₂SO₄ for 3 h and 2 h, respectively. Treated Nafion® was blotted dry and fixed in an aluminium holder for spin-coating. On both sides of the membrane, a few drops of zeolite/Nafion® solution were deposited while spinning for 1 min at 800 rpm on a Specialty Coating Systems 6800 (Indianapolis, IN). Membrane electrode assemblies were prepared by positioning the anode and cathode carbon fibre electrodes on opposite sides of pre-treated Nafion® membrane, and hot-pressing between Teflon liners at 5 MPa pressure and at 130 °C for 3 min. In between experiments, the assemblies were stored under ambient conditions between dust-free cloth.
**9l Photoelectrochemical experiments.** The membrane-electrode assembly was fixed in the PEC cell. A mask covering the photoanode with a circular opening of 10 mm diameter ensured an illuminated surface area of 0.785 cm². The total cathode surface area was also 0.785 cm². The anode in- and outlet were left open to the air, or contacted with a gas stream at 12.5 mL min⁻¹. The cathode was flushed with dry nitrogen for 30 minutes prior to an experiment and sealed. Illumination was done by means of a Xe lamp with IR filter (Oriel 66984, Newport, Irvine, CA) adjusted such that the incident intensity equalled either 50 mW cm⁻² or 100 mW cm⁻² and the lamp was fitted either with a UV band pass filter or Air Mass 1.5 solar simulation filter (Newport, Irvine, CA). The currents were recorded at short circuit (zero applied voltage) in a two-electrode measurement using a potentiostat (Versastat 4, Princeton Applied Research, Oak Ridge, TN) and Versastudio electrochemical analysis software. The products were analysed with a Quantitative Gas Analyser (Hiden Analytical, Warrington, UK). A correction was made for interference by water fragments and the nitrogen signal was used as an internal standard.

### Drawing Description

### BRIEF DESCRIPTION OF THE DRAWINGS

The present invention will become more fully understood from the detailed description given herein below and the accompanying drawings which are given by way of illustration only, and thus are not limitative of the present invention, and wherein:
Figure 1. is a graphic on the photocurrent in an experiment using conventional reference membrane-electrode assembly mounted in a two-compartment photoelectrochemical device illuminated with UV light from 5 to 125 s. The anode compartment was either fed with hydrated ambient air (Air anode trace) or hydrated N₂ (N2 anode trace). The lower current using air demonstrates the detrimental influence of molecular oxygen on performance.
Figure 2 is a graphic on the photocurrent in an experiment using membrane-electrode assembly according to the invention mounted in a two-compartment photoelectrochemical device illuminated with UV light from 5 to 65 s. The photoanode compartment was either fed with hydrated ambient air (Air anode trace) or hydrated N₂ (N2 anode trace). Illumination intensity: 50 m W/cm².
Figure 3 is a graphic on the internal temperature of the anode compartment of a cell under two different illumination intensities (50 mW/cm2 and 100 mW/cm2) and using filters for specific spectral ranges.
Figure 4: is a graphic on the current when the cell was illuminated with a broad spectrum Xe lamp at 50 mW/cm². Current drops with time due to dehydration of the Nafion membrane.
Figure 5 is a graphic showing the current when the cell was illuminated with a broad spectrum Xe lamp at 50 mW/cm2. Indicated are the anode (humidified) air flow rates, in ml/min. When there is no flow in the anode compartment (0 ml/min), the photocurrent is higher than in presence of flow. The higher the flow rate, the lower the photocurrent.
Figure 6: is a graphic that displays the current in a cell that was illuminated with a broad spectrum Xe lamp at 50 mW/cm². When a UV band pass filter is added in front of the light source, ineffective visible light is filtered and cell temperature drops (Figure 4). As a consequence, photocurrent is more stable over time.
Figure 7: is a graphic that displays the current in a cell that was illuminated with a broad spectrum Xe lamp at 100 mW/cm2, fitted with an AM1.5 solar simulator filter. Dehydration of the proton exchange membrane is less pronounced under such reduced illumination, and dehydration can be further prevented by using additional filters or interrupting light periods by dark periods. Dark periodes were present in the simulated solar experiment (100 mW/cm2) at 600 s, 1250 s and 1950 s. The intensity of the filtered light was only 60 mW/cm2, which explains the lower current in this instance.
Figure 8 provides SEM pictures of zeolite nanopowder aggregate particles introduced as water adsorbing stubs in the proton conducting membrane (Nafion) of the membrane-electrode assembly.
Figure 9 demonstrates the current in a cell that was illuminated with a broad spectrum Xe lamp at 50 mW/cm². equipped with water adsorbing stubs. Intermittent dark periods help to regenerate the membrane's moisture content and high photocurrents are maintained.. In the "untreated air" experiment the photoanode was fed with ambient air at 40% relative humidity at 27°C Even using air with such low relative humidity, high and stable photocurrent is obtained.
Figure 10 illustrates hydrogen production measured by mass spectrometry and estimated from the integrated photocurrent assuming 100% Faradaic efficiency. The cell was illuminated with a broad spectrum Xe lamp at 50 mW/cm2 for the indicated imes. During illumination, anode and cathode were sealed. The anode was filled with humidified air and the cathode was filled with dry nitrogen. After the illumination period, the light source was turned off and the cathode compartment was immediately sampled by a mass spectrometer.
Figure 11 illustrates the energy device run in electricity production mode. The cell was flushed with 12.5 ml/min humidified air at the anode and 25 ml/min dry nitrogen/hydrogen mixture (controlled with mass flow controllers) at the cathode. Hydrogen concentration was monitored with the mass spectrometry and open circuit potential was measured.
Figure 12 illustrates the energy device that runs in electricity production mode. The cell was short circuited with a 97 % hydrogen in nitrogen flow of 25 ml/min at the cathode and 12.5 ml/min humidified air at the anode.
Figure 13 is a graphic display of transferred electrons and produced hydrogen shown in function of the elapsed time. It concerns the result of a photoelectrochemical experiment of example 4 of this application.
Figure 14 Thermogravimetric analysis of hierarchical carbon electrode with (red trace = dot symbol) and without (blue trace = line only) titanium dioxide overlayer. The shift in thermal degradation from 500 °C to > 650 °C indicates stability enhancement by atomic layer deposited titanium dioxide overlayer."
Figure 15 displays the water uptake of Nafion®/zeolite composite. Water uptake of electrodes covered with Nafion® or Nafion®/zeolite composite. Electrodes, dried at 120 °C under N2 flow, were exposed to humidified N2 with a water content of 24 g m-3. Chamber temperature was decreased from 120 °C to 50 °C.
Figure 16 demonstrates the performance of an improved assembly. Photocurrent profile obtained when the PEC cell with improved assembly is illuminated with UV light at 50 mW cm-2. The cathode was filled with dry nitrogen and then sealed. The anode was pre-treated with a flow of humidified outside air. During illumination, the flow was interrupted. After reaching steady state operation, a fairly stable photocurrent of 25 µA cm-2 was measured.

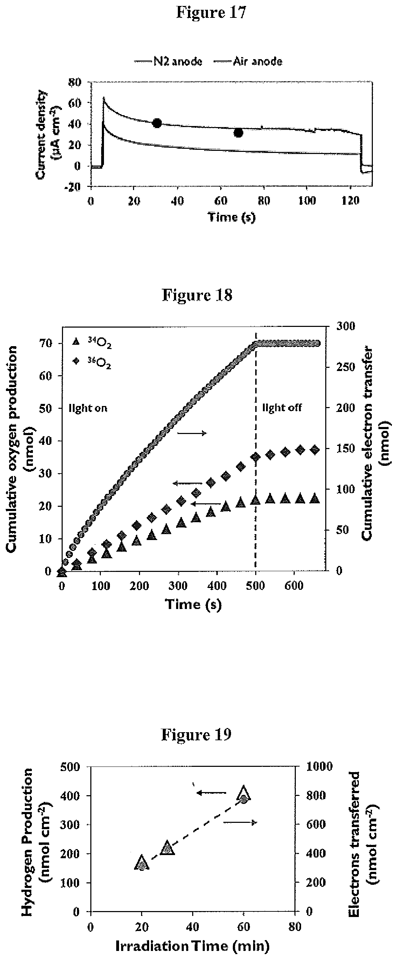

Figure 17 demonstrates the performance of non-optimized assembly. Photocurrent profiles obtained with a membrane-electrode assembly with photoanode with electrophoretically deposited TiO2 nanoparticles. The cell was illuminated with UV light (50 mW cm-2). The cathode compartment was filled with dry nitrogen and the anode compartment fed with humidified nitrogen (red trace = with dot symbol) or humidified air (blue trace = line only). In both cases, photocurrent decayed strongly during the 120 s experiment. When humidified air is used as a feed, photocurrent is lower and the decay more pronounced due to the presence of molecular oxygen.
Figure 18 Oxygen production at the anode. 36O2 and 34O2 production and electron transfer during a H218O splitting experiment under UV illumination (100 mW cm-2) in N2 atmosphere. Illumination was shut off after 500 s. The system contained residual H216O, which causes concurrent 34O2 formation.
Figure 19 is a graphic display that demonstrates the faradaic efficiency for hydrogen. Hydrogen production and anode-to-cathode electron transfer for three periods of UV illumination (50 mW cm-2). The cathode was sealed during each measurement to allow hydrogen accumulation. The anode was left open to humidified outside air. The correspondence between electron transfer and product formation (two electrons for each hydrogen molecule) reveals close to 100 % Faradaic efficiency.

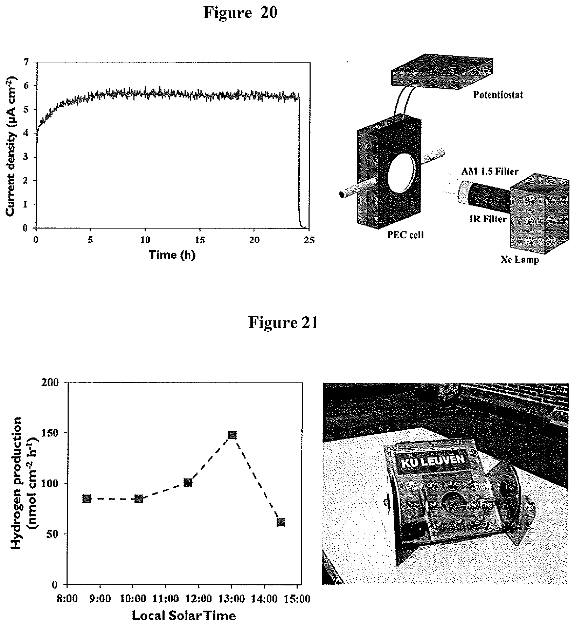

Figure 20 is a graphic display of a 24 h water vapour splitting experiment. Laboratory experiment of water splitting with the PEC cell in ambient air using simulated solar light (Air Mass 1.5; 100 mW cm-2). Photocurrent was registered during 24 hours of continuous illumination.
Figure 21 is a graphic display on an experiment under ambient conditions. Hydrogen production from outside air and natural sunlight at different times of the day in the PEC cell installed on a table on the roof of the laboratory building.

## Claims

1. An apparatus for hydrogen production from ambient air humidity and light and for transformation of the generated hydrogen into electricity, comprising: at least one semiconductor photoanode comprising electric conducting macroscopic material coated at least in part by electric conducting nanoscopic material, whereby the electric conducting nanoscopic material of the photoanode is entirely coated with semiconductor layer and whereby the photoanode being positioned to receive light and to receive ambient air, furthermore comprising at least one cathode comprising electric conducting macroscopic material coated at least in part by conduction nanoscopic material, wherein photoanode and cathode being conductively interconnected for electron flow and further being separated by a proton exchange membrane, forming a membrane electrode assembly (MEA) comprising such proton exchange membrane for the proton flow therethrough to the cathode and whereby the membrane electrode assembly comprises a self-hydrating or water capturing material of the group consisting of water capturing microporous material and self-hydrating monolithic membrane, the apparatus **characterized in that** it further comprises an illumination controller, wherein the controller is a switch configured to let follow in sucession periods of illumination of the at least one semiconductor photoanode with periods of non-illumination of the at least one semiconductor photoanode.

2. The apparatus according to claim 1, whereby the semiconductor layer is a semiconductor oxide layer or a semiconductor nanolayer.

3. The apparatus according to any one of the previous claims, whereby the membrane electrode assembly comprises hygroscopic nanoparticle aggregates.

4. The apparatus according to any one of the previous claims, **characterized in that** the at least one cathode is in a confined environment, compartment or a chamber comprising an outlet for releasing or extracting H2 produced at said cathode.

5. The apparatus according to claim 2, **characterized in that** the semiconductor oxide layer comprises titanium dioxide.

6. The apparatus according to any one of the claims, whereby the semiconductor layer is a semiconductor nanolayer and this coating nanolayer has a thickness of more than 3 nm and less than 15 nm.

7. The apparatus according to any one of the previous claims, **characterized in that** the electric conducting nanoscopic material comprises carbon nanotubes further coated with a continuous layer of semiconductor of the group of the oxides consisting of TiO₂, Fe₂O₃, ZnO, NaTaO₃, WO₃, BiVO₄, SrTiO₃, Cu₂O or of the group of sulfides consisting of CdS and ZnS) or of the group of nitrides consisting of. GaN and TaON or of their combinations.

8. The apparatus according to claim 7, **characterized in that** plasmonic nanoparticles and in particular silver-gold alloy nanoparticles are deposited on the continuous layer of semiconductor at the photoanode.

9. The apparatus according to any one of the previous claims, **characterized in that** catalytic nanosize platinum particles are deposited on the electric conducting nanoscopic material of the cathode .

10. The apparatus according to any one of the previous claims, **characterized in that** it is without any water oxidation co-catalyst, such IrRuOx.

11. The apparatus according to any one of the previous claims, **characterized in that** membrane-electrode assembly is mounted in a two-compartment photoelectrochemical cell.

12. The apparatus according to any one of the previous claims, **characterized in that** the cathode compartment is closed to accumulate the produced hydrogen.

13. The apparatus according to any one of the previous claims, **characterized in that** the cathode is a photocathode

14. A method of operating the apparatus according to any one of the previous claims 1 to 13 by introducing non illuminating photoanode periods (dark periods) switched with illuminating photoanode periods of illumination to obtain enhanced hydrogen production rates.

15. The method according to claim 14, whereby the apparatus produces hydrogen gas from a water vapor containing gas mixture using solar energy during the photoanode illuminations periods and that converts hydrogen into electricity during the darks periods upon demand.

## Patentansprüche

1. Einrichtung zur Wasserstoffherstellung aus Feuchtigkeit von Umgebungsluft und Licht und zur Umwandlung des erzeugten Wasserstoffs in Strom, umfassend: mindestens eine Halbleiter-Photoanode, umfassend elektrisch leitendes makroskopisches Material, das mindestens teilweise durch elektrisch leitendes nanoskopisches Material überzogen ist, wobei das elektrisch leitende nanoskopische Material der Photoanode vollständig mit einer Halbleiterschicht überzogen ist und wobei die Photoanode positioniert ist, um Licht aufzunehmen und um Umgebungsluft aufzunehmen, weiterhin umfassend mindestens eine Kathode, umfassend elektrisch leitendes makroskopisches Material, das mindestens teilweise durch nanoskopisches Leitmaterial überzogen ist, wobei Photoanode und Kathode für Elektronenwanderung leitend miteinander verbunden sind und weiter durch eine Protonenaustauschmembran getrennt sind, eine Membranelektrodenanordnung (MEA) bildend, umfassend solche Protonenaustauschmembran für die Protonenwanderung dadurch zur Kathode und wobei die Membranelektrodenanordnung ein selbst-hydrierendes oder wasserbindendes Material der Gruppe bestehend aus wasserbindendem mikroporösem Material und selbsthydrierender monolithischer Membran umfasst, wobei die Einrichtung **dadurch gekennzeichnet ist, dass** sie weiter eine Beleuchtungssteuerung umfasst, wobei die Steuerung ein Schalter ist, der konfiguriert ist, um Beleuchtungsperioden der mindestens einen Halbleiter-Photoanode und Nichtbeleuchtungsperioden der mindestens einen Halbleiter-Photoanode aufeinander folgen zu lassen.

2. Einrichtung nach Anspruch 1, wobei die Halbleiterschicht eine Halbleiteroxidschicht oder eine Halbleiternanoschicht ist.

3. Einrichtung nach einem der vorstehenden Ansprüche, wobei die Membranelektrodenanordnung hygroskopische Nanopartikelaggregate umfasst.

4. Einrichtung nach einem der vorstehenden Ansprüche, **dadurch gekennzeichnet, dass** die mindestens eine Kathode in einer begrenzten Umgebung, Fach oder einer Kammer ist, umfassend einen Auslass zum Freisetzen oder Extrahieren von an der Kathode hergestelltem H₂.

5. Einrichtung nach Anspruch 2, **dadurch gekennzeichnet, dass** die Halbleiteroxidschicht Titandioxid umfasst.

6. Einrichtung nach einem der vorstehenden Ansprüche, wobei die Halbleiterschicht eine Halbleiternanoschicht ist und diese Überzugsnanoschicht eine Dicke von mehr als 3 nm und weniger als 15 nm aufweist.

7. Einrichtung nach einem der vorstehenden Ansprüche, **dadurch gekennzeichnet, dass** das elektrisch leitende nanoskopische Material Kohlenstoff-Nanoröhren umfasst, die weiter mit einer durchgehenden Schicht eines Halbleiters der Gruppe der Oxide bestehend aus TiO₂, Fe₂O₃, ZnO, NaTaO₃, WO₃, BiVO₄, SrTiO₃, Cu₂O oder der Gruppe von Sulfiden bestehend aus CdS und ZnS) oder der Gruppe von Nitriden bestehend aus .GaN und TaON oder aus ihren Kombinationen überzogen sind.

8. Einrichtung nach Anspruch 7, **dadurch gekennzeichnet, dass** plasmonische Nanopartikel und insbesondere Silber-Gold-Legierungspartikel auf der durchgehenden Schicht des Halbleiters an der Photoanode abgelagert sind.

9. Einrichtung nach einem der vorstehenden Ansprüche, **dadurch gekennzeichnet, dass** katalytische Platinpartikel mit Nanogröße auf dem elektrisch leitenden nanoskopischen Material der Kathode abgelagert sind.

10. Einrichtung nach einem der vorstehenden Ansprüche, **dadurch gekennzeichnet, dass** sie ohne jeglichen Wasseroxidations-Cokatalysator, wie IrRuOx, ist.

11. Einrichtung nach einem der vorstehenden Ansprüche, **dadurch gekennzeichnet, dass** die Membranelektrodenanordnung in einer zweifächerigen photoelektrochemischen Zelle montiert ist.

12. Einrichtung nach einem der vorstehenden Ansprüche, **dadurch gekennzeichnet, dass** das Kathodenfach geschlossen ist, um den hergestellten Wasserstoff anzuhäufen.

13. Einrichtung nach einem der vorstehenden Ansprüche, **dadurch gekennzeichnet, dass** die Kathode eine Photokathode ist.

14. Verfahren zum Betrieb der Einrichtung nach einem der vorstehenden Ansprüche 1 bis 13 durch Einführen von Photoanoden-Nichtbeleuchtungsperioden (dunkle Perioden) gewechselt mit Photoanoden-Beleuchtungsperioden der Beleuchtung, um verbesserte Wasserstoffherstellungsraten zu erzielen.

15. Verfahren nach Anspruch 14, wobei die Einrichtung Wasserstoffgas aus einem Wasserdampf, der eine Gasmischung enthält, unter Verwendung von Solarenergie während der Photoanoden-Beleuchtungsperioden herstellt und das auf Anfrage während der dunklen Perioden Wasserstoff in Strom verwandelt.

## Revendications

1. Appareil destiné à la production d'hydrogène à partir d'humidité de l'air ambiant et de lumière et à la transformation de l'hydrogène généré en électricité, comprenant : au moins une photoanode à semi-conducteur comprenant un matériau macroscopique électro-conducteur revêtu au moins en partie par un matériau nanoscopique électro-conducteur, dans lequel le matériau nanoscopique électro-conducteur de la photoanode est entièrement revêtu avec la couche semi-conductrice et dans lequel la photoanode est positionnée pour recevoir la lumière et pour recevoir l'air ambiant, comprenant en outre au moins une cathode comprenant un matériau macroscopique électro-conducteur revêtu au moins en partie par un matériau nanoscopique de conduction, dans lequel photoanode et cathode sont interconnectées de manière conductrice pour le flux d'électrons et sont en outre séparées par une membrane échangeuse de protons, formant un ensemble électrode à membrane (MEA) comprenant ladite membrane échangeuse de protons pour le flux de protons à travers elle vers la cathode et dans lequel l'ensemble électrode à membrane comprend un matériau auto-hydratant ou capturant l'eau du groupe constitué par un matériau microporeux capturant l'eau et une membrane monolithique auto-hydratante, l'appareil étant **caractérisé en ce qu'**il comprend en outre un dispositif de commande d'éclairage, dans lequel le dispositif de commande est un commutateur configuré pour faire succéder des périodes d'éclairage de l'au moins une photoanode à semi-conducteur par des périodes de non-éclairage de l'au moins une photoanode à semi-conducteur.

2. Appareil selon la revendication 1, dans lequel la couche semi-conductrice est une couche d'oxyde semi-conducteur ou une nano-couche semi-conductrice.

3. Appareil selon l'une quelconque des revendications précédentes, dans lequel l'ensemble d'électrodes à membrane comprend des agrégats de nanoparticules hygroscopiques.

4. Appareil selon l'une quelconque des revendications précédentes, **caractérisé en ce que** l'au moins une cathode est dans un environnement, un compartiment ou une chambre confiné(e) comprenant une sortie pour libérer ou extraire l'H₂ produit au niveau de ladite cathode.

5. Appareil selon la revendication 2, **caractérisé en ce que** la couche d'oxyde semi-conducteur comprend du dioxyde de titane.

6. Appareil selon l'une quelconque des revendications, dans lequel la couche semi-conductrice est une nano-couche semi-conductrice et cette nano-couche de revêtement a une épaisseur supérieure à 3 nm et inférieure à 15 nm.

7. Appareil selon l'une quelconque des revendications précédentes, **caractérisé en ce que** le matériau nanoscopique électro-conducteur comprend des nanotubes de carbone revêtus en outre d'une couche continue de semi-conducteur du groupe des oxydes constitué de TiO₂, Fe₂O₃, ZnO, NaTaO₃, WO₃, BiVO₄, SrTiO₃, Cu₂O ou du groupe des sulfures constitué de CdS et de ZnS ou du groupe des nitrures constitué de GaN et de TaON ou de leurs combinaisons.

8. Appareil selon la revendication 7, **caractérisé en ce que** des nanoparticules plasmoniques et en particulier des nanoparticules d'alliage d'or et d'argent sont déposées sur la couche continue de semi-conducteur au niveau de la photoanode.

9. Appareil selon l'une quelconque des revendications précédentes, **caractérisé en ce que** des particules de platine nanométriques catalytiques sont déposées sur le matériau nanoscopique électro-conducteur de la cathode.

10. Appareil selon l'une quelconque des revendications précédentes, **caractérisé en ce qu'**il est sans aucun co-catalyseur d'oxydation de l'eau, tel que l'IrRuOx.

11. Appareil selon l'une quelconque des revendications précédentes, **caractérisé en ce que** l'ensemble d'électrodes à membrane est monté dans une cellule photoélectrochimique à deux compartiments.

12. Appareil selon l'une quelconque des revendications précédentes, **caractérisé en ce que** le compartiment de cathode est fermé pour accumuler l'hydrogène produit.

13. Appareil selon l'une quelconque des revendications précédentes, **caractérisé en ce que** la cathode est une photocathode.

14. Procédé de fonctionnement de l'appareil selon l'une quelconque des revendications 1 à 13 précédentes, par introduction de périodes de non éclairage de photoanode (périodes d'obscurité) alternées avec des périodes d'éclairage de photoanode pour obtenir des taux de production d'hydrogène améliorées.

15. Procédé selon la revendication 14, dans lequel l'appareil produit de l'hydrogène gazeux à partir d'une vapeur d'eau contenant un mélange gazeux en utilisant l'énergie solaire au cours de périodes d'éclairage de la photoanode et qui convertit l'hydrogène en électricité au cours de périodes d'obscurité sur demande.
